(19) Europäisches Patentamt
European Patent Office
Office européen des brevets

(11) EP 1 674 858 A1

(12) **EUROPEAN PATENT APPLICATION**

(43) Date of publication:
**28.06.2006 Bulletin 2006/26**

(51) Int Cl.:
***G01N 21/76*** (2006.01) ***G01N 21/25*** (2006.01)

(21) Application number: **05018317.7**

(22) Date of filing: **23.08.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **24.12.2004 JP 2004372619**

(71) Applicant: **HITACHI, LTD.**
**Chiyoda-ku**
**Tokyo 100-8280 (JP)**

(72) Inventors:
- **Kambara, Hideki,**
**Hitachi Ltd - Intell. Prop. Off.**
**Chiyoda-ku**
**Tokyo 100-8220 (JP)**
- **Kajiyama, Tomoharu,**
**Hitachi Ltd Intell. Prop. Off**
**Chiyoda-ku**
**Tokyo 100-8220 (JP)**
- **Harada, Kunio,**
**Hitachi Ltd Intell. Prop. Office**
**Chiyoda-ku**
**Tokyo 100-8220 (JP)**
- **Kamahori, Masao,**
**Hitachi Ltd Intell. Prop. Office**
**Chiyoda-ku**
**Tokyo 100-8220 (JP)**

(74) Representative: **Strehl Schübel-Hopf & Partner**
**Maximilianstrasse 54**
**80538 München (DE)**

(54) **Luminescence detection apparatus**

(57) An object of the present invention is to provide a luminescence detection apparatus compact in size which is capable of conveniently determining DNA base sequences at a low cost. According to the present invention, a luminescence detection apparatus 1 is provided comprising: a plurality of reaction cells 6 each having a transparent bottom portion; a solution-dispensing portion 19 equipped with capillaries 18 positioned above the reaction cells 6 and put into a one-to-one correspondence with the reaction cells 6; and a light-detecting portion 29 having a plurality of light-sensing elements 24 put into a one-to-one correspondence with the reaction cells 6 and arranged in proximity to the bottom surfaces of the reaction cells 6, wherein the a plurality of light-sensing elements 24 of the light-detecting portion 29 detect respective luminescences in the reaction cells 6 generated by injecting reagent solutions from the solution-dispensing portion 19 to the reaction cells 6.

FIG.1

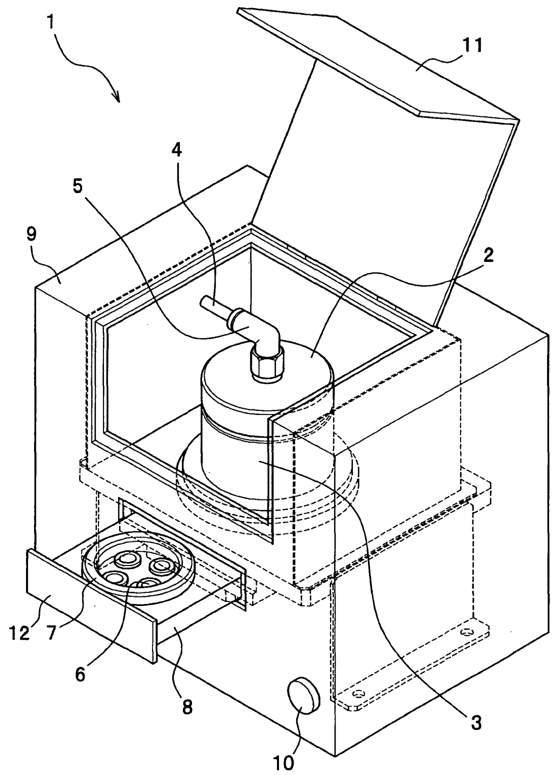


EP 1 674 858 A1

**Description**

Background of the Invention

The present invention relates to a luminescence detection apparatus that detects luminescence released by biological and chemical reactions between a reagent solution and a reaction solution.

Heretofore, a broad spectrum of fluorescent DNA sequencers, for example, by gel electrophoresis and capillary array electrophoresis have widely been used as DNA sequencers automatically determining DNA base sequences. DNA sequencing using these DNA sequencers is a method based on the dideoxy chain termination (Sanger method) by which prepared DNA fragments are subjected to electrophoresis (see e.g., T.A. Brown, Genomes Medical Science International published on May 26, 2000, p. 70-78).

Especially capillary array electrophoresis can determine a long base sequence at a time and as such, played a greatly active role in the human genome project whose completion was announced by the human genome sequencing consortium in April 2003.

Before and after the completion of the human genome project, DNA sequencers in demand were getting divided into large-scale sequencing-specific apparatuses for the analysis of DNA in large quantities with high throughput and into apparatuses compact in size and conveniently available at low cost.

For example, gene diagnosis and polymorphism analysis, which conduct comparison with known genomic information, do not have to newly determine the whole DNA sequence, and the determination of a DNA sequence in a short region of interest suffices for most situations. In this case, preferred DNA sequencers are apparatuses compact in size and conveniently available at low cost. However, DNA sequencers by gel electrophoresis and capillary array electrophoresis in the prior arts are not necessarily proper because they need to comprise, for example, a high voltage power source.

Therefore, DNA base sequencing called Pyrosequencing that uses stepwise chemical reactions combining polymerase-catalyzed extension of a complementary DNA strand with bioluminescence detection (see e.g., Analytical Biochemistry 244, 367-373 (1997)) receives attention as a method that satisfies the above-described requirements.

Hereinafter, the basic principle of Pyrosequencing will be illustrated.

Pyrosequencing determines a base sequence by luminescence detection conducted simultaneously with polymerase-catalyzed DNA complementary strand extension reaction after four different dNTPs are added successively but one at a time to template DNA.

In Pyrosequencing, the dNTP is incorporated into the template DNA to generate pyrophosphate, if DNA complementary strand extension reaction occurs. The generated pyrophosphate is converted to ATP by an enzyme such as ATP sulfurylase. The generated ATP causes a luciferase/luciferin reaction system to light up. This bioluminescence is optically detected. On this occasion, by monitoring a luminescence for determining which type of dNTP is added to cause a luminescence, the presence or absence of DNA complementary strand extension reaction can be detected to determine bases one by one in the template DNA base sequence. In the case of consecutive bases, the number of the same consecutive base species can be determined by monitoring luminescent intensity, because the amount of pyrophosphate generated during DNA complementary strand extension reaction is proportional to the number of bases incorporated, that is, proportional to the amount of luminescences. In this case, the added dNTPs that remain present in the reaction solution hinder the determination of the sequence. In recent years, a method for enzymatically degrading an excess of dNTP by allowing a dNTP-degrading enzyme (apyrase) to coexist with the reaction solution (see WO 98/28440) has been developed, and automated apparatuses for the method have been achieved.

Thus, Pyrosequencing does not require large components such as a high voltage power source, a laser light source, and a space for DNA separation used in conventional gel electrophoresis and capillary array electrophoresis.

As described above, Pyrosequencing that exploits bioluminescences receives attention as a method capable of conveniently determining DNA base sequences at low cost with an apparatus compact in size, as compared to gel electrophoresis and capillary array electrophoresis.

However, pyrosequencers do not have a long history. Pyrosequencers currently commercially available are large apparatuses that employ a 96-well titer plate as a reaction cell and use a CCD camera in an optical system (see National Publication of International Patent Application No. 2002-518671), and are therefore susceptible to improvement.

The pyrosequencers still have room for improvement in point of convenience and cost efficiency.

At least four different reagent solutions (containing dATP, dCTP, dGTP, or dTTP) are injected into reaction cells. In general, the reagent solutions are successively injected using a set of four reagent tubes and four nozzles respectively communicating with the reagent tubes. For example, when 96 reaction cells (i.e., titer plate) were used, 96 sets each composed of four reagent tubes and four nozzles respectively communicating with the reagent tubes, that is, 384 reagent tubes and 384 nozzles respectively communicating with the reagent tubes, required preparing. In this case, reagent tubes and nozzles were so many that problems came up, such as a rise in manufacturing costs and complicated maintenance for preventing clogging or the like.

The amount of the reagent solution added for determining a DNA base sequence, that is, a dNTP solution, is preferably not more than one hundredth the amount of a reaction solution. This is because the addition of the dNTP solution in large amounts changes the amount of the reaction solution and thereby causes reduction in enzyme concentration and in reaction rate. Therefore, the addition of the dNTP solution involves stirring the reaction solution. This becomes particularly important in miniaturizing the apparatus or in injecting the reagent solution in trace amounts. For example, when 20 μL of the reaction solution is used, the amount of the dNTP solution is 0.2 μL or less, and means for efficiently stirring a trace amount of the reagent solution as well as convenient means compact in size for accurately injecting a trace amount of the reaction solution is required.

The present invention solves the above-described problems, and an object of the present invention is to provide a luminescence detection apparatus compact in size which is capable of conveniently determining DNA base sequences at low cost.

Summary of the Invention

For attaining the above-described object, the present invention provides a luminescence detection apparatus comprising: a plurality of reaction cells each having a substantially transparent bottom portion; a solution-dispensing portion equipped with capillaries positioned above the above-described reaction cells and put into a one-to-one correspondence with the above-described reaction cells; and a light-detecting portion having a plurality of light-sensing elements put into a one-to-one correspondence with the above-described reaction cells and arranged in proximity to the bottom surfaces of the above-described reaction cells, which uses the a plurality of light-sensing elements of the above-described light-detecting portion to individually detect luminescences generated in the above-described reaction cells by injecting reagent solutions from the above-described solution-dispensing portion to the above-described reaction cells.

Such construction allows the luminescence detection apparatus to discharge reagent solutions from all of the capillaries provided in the solution-dispensing portion and thereby to achieve collective and simultaneous injection in simple apparatus construction without the use of a complicated driving portion. In addition, the luminescence detection apparatus can be constructed to have reagent tubes and capillaries smaller in number than those of prior arts. Since reagents solutions are discharged from all of the capillaries at predetermined periods, the apparatus does not have to be designed in consideration of the drying of discharge nozzles of the capillaries, and so on.

Furthermore, the light-detecting portion secures a large solid angle that receives light and can therefore detect luminescences with high light-gathering efficiency without the use of a complicated optical system. Therefore, the luminescence detection apparatus can achieve a high-sensitivity light-detecting portion.

According to the present invention, a luminescence detection apparatus compact in size which is capable of conveniently determining DNA base sequences at low cost can be provided.

Other objects, features and advantages of the invention will become apparent from the following description of the embodiments of the invention taken in conjunction with the accompanying drawings.

Brief Description of Drawings

Fig. 1 is a perspective view showing the appearance of a luminescence detection apparatus in an embodiment of the present invention;

Fig. 2 is a perspective view showing the substantial part of the luminescence detection apparatus shown in Fig. 1 when a body cover is removed from the luminescence detection apparatus;

Fig. 3 is a view illustrating corresponding arrangements between the components of a solution-dispensing portion and reaction cells in an embodiment of the present invention;

Fig. 4 is a vertical sectional view showing the substantial part of a luminescence detection apparatus in an embodiment of the present invention;

Fig. 5 is an enlarged sectional view of the substantial part for illustrating the attachment mode of a transparent conductive layer, where Fig. 5(a) illustrates the attachment mode of a transparent conductive layer 26a of the present embodiment and Fig. 5(b) illustrates the application of the attachment mode of a typical transparent conductive layer;

Fig. 6 is a schematic view illustrating the state of stirring with a vibration motor in the attachment mode of the transparent conductive layer shown in Fig. 5, where Fig. 6(a) illustrates construction during stirring when the attachment mode of a transparent conductive layer of the present embodiment is applied and Fig. 6(b) illustrates construction during stirring when the attachment mode of a typical transparent conductive layer is applied;

Figs. 7(a), 7(b), 7(c), and 7(d) are results of detecting noises either during non-stirring or during stirring in the attachment modes of a transparent conductive layer of the present embodiment and a typical transparent conductive layer;

Fig. 8 is measurement data showing correlation between the frequency of a vibration motor and reaction efficiency;
Fig. 9 is a view illustrating corresponding arrangements between the components of a solution-dispensing portion and reaction cells in Modification Example 1 to the number of reaction cells;
Fig. 10 is a view illustrating corresponding arrangements between the components of a solution-dispensing portion and reaction cells in Modification Example 2 to the number of reaction cells;
Fig. 11 is a view illustrating corresponding arrangements between the components of a solution-dispensing portion and reaction cells in Modification Example 3 to the number of reaction cells;
Fig. 12 is a view illustrating the order of dNTP solutions to be injected into each reaction cell 6 in the present Example; and
Fig. 13 is detection data of a luminescence in each reaction cell in the present Example.

Description of Reference Numerals

1: luminescence detection apparatus
2: reagent tube holder (disk)
3: rotating shaft
4: pressure pipe (passage)
5: rotating seal (passage)
6: reaction cell
7: reaction cell holder (holding plate)
8: tray (holding plate)
9: body cover
10: eject button
11: door
12: light-shielding plate
13: base
14: shield
15: shield case
16: stand
17: reagent tube (reagent container)
18: capillary
19: solution-dispensing portion
20: gas passage (passage)
20a: gas inlet
20b: upper end
21: convex portion
22: rotating motor
23: through-hole
24: photosensor (light-sensing element)
25: amplifier
26: quartz glass
26a: transparent conductive layer
27: guide
28: rotating-shaft bearing
29: light-detecting portion

Detailed Description of the Invention

Hereinafter, a best mode for carrying out a luminescence detection apparatus of the present invention (hereinafter, referred to as an "embodiment") will be described in detail, appropriately referring to the drawings. In the descriptions below, the same reference numerals will be used to designate the same components, so that the redundant description will be omitted.
Now referring to Fig. 1 and Fig. 2, the luminescence detection apparatus according to the present embodiment will be outlined.
Fig. 1 is a perspective view showing the appearance of a luminescence detection apparatus 1, and Fig. 2 is a perspective view showing the substantial part of the luminescence detection apparatus 1 shown in Fig. 1, from which a body cover 9 is removed.

As shown in Fig. 1, a reagent tube holder 2 and a rotating shaft 3 removably mounting the reagent tube holder 2 thereon are provided in the upper middle portion of the luminescence detection apparatus 1. Reagent tubes 17 containing reagent solutions are inserted in the under surface of the reagent tube holder 2 that has been removed from the rotating shaft 3 (see Fig. 3). A pressure pipe 4 is connected via a rotating seal 5 to the upper portion of the reagent tube holder 2.

Reaction cells 6 are the fields of reaction between reagent solutions discharged from capillaries 18 (see Fig. 3) communicating with the reagent tubes 17 and reaction solutions dispensed in advance in the reaction cells 6. In the present embodiment, the reaction cells 6 are, for example, the fields of DNA complementary strand extension reaction while being the fields of luciferin/luciferase luminescent reaction.

A "sample" in the present embodiment is a substance to be analyzed and is not limited to a biological sample. If the sample is a biological sample, the biological sample is not limited to a nucleic acid. A "reaction solution" is meant to contain at least the sample and to further contain a buffer solution, a compound, an enzyme, and so on, as appropriate, necessary for reaction with an injected reagent solution and luminescent reaction.

The reaction cells 6 are provided via a reaction cell holder 7 in the middle of a tray 8 freely coming in and out. On operation of the apparatus, as the tray 8 is housed into the apparatus, the reaction cells 6 are carried in the apparatus and positioned in the respective lower perpendicular directions of the capillaries 18 communicating with the reaction tubes 17. When the reaction cells 6 are removed or replaced, the reaction cells 6 are taken out of the apparatus by pulling out the tray 8. The tray 8 is held by a guide 27 (see Fig. 4) and can come in and out at the push of an eject button 10 installed on the body cover 9.

Hereinafter, the present embodiment will be described under the assumption that the tray 8 is housed within the luminescence detection apparatus 1 and four reaction cells 6 are positioned in the respective lower perpendicular directions of the capillaries 18 communicating with the reaction tubes 17. In addition, the reagent tubes 17 are inserted in the under surface of the reagent tube holder 2, and the reagent tube holder 2 is mounted on the rotating shaft 3.

The body cover 9, a door 11, and a light-shielding plate 12 function as light-shielding members for shielding the internal portion of the luminescence detection apparatus 1 from light. The door 11 is appropriately opened for the replacement of reagent solutions and maintenance of the rotating shaft 3 and a solution-dispensing portion 19 (see Fig. 4) described below.

As shown in Fig. 2, the rotating shaft 3 is rotatably held via a rotating-shaft bearing 28 (see Fig. 4) in the upper portion of a base 13 in the horizontal direction of the base 13. A shield 14 surrounding the rotating shaft 3 in a U shape is further provided in the upper portion of the base 13 to prevent stray lights and electrical noises.

On the other hand, a shield case 15 accommodating the tray 8 holding the reaction cells 6 and photosensors 24 (see Fig. 4) for detecting light generated in the reaction cells 6 is provided below the base 13.

The base 13 is held by a stand 16.

Next, referring to Fig. 3 and Fig. 4, the luminescence detection apparatus 1 according to the present embodiment will be described in detail.

Fig. 3 is a view illustrating corresponding arrangements between the capillaries 18 communicating with the reagent tubes 17 and the reaction cells 6.

When the reagent tubes 17, the capillaries 18, and the reaction cells 6 are represented by individual components for describing each corresponding arrangement, reference numerals with alphabetical suffixes such as 17a, 17b, 17c, and 17d (in the case of the reagent tubes) are used. When the components are indicated collectively, they are described, for example, as represented by reagent tube(s) 17.

Each of four reagent tubes 17a to 17d contains each one (but different from those in the other reagent tubes) of four different deoxynucleotide solutions (containing dATP, dCTP, dGTP, or dTTP) or derivatives thereof as a reagent solution. The reagent solutions are respectively discharged from four capillaries 18a to 18d respectively communicating with the reagent tubes 17a to 17d by air pressure that is supplied from the pressure pipe 4. Four reaction cells 6a to 6d respectively put into a one-to-one correspondence with the capillaries 18a to 18d are arranged in the respective lower perpendicular directions of the capillaries 18a to 18d. The reagent solutions discharged from the capillaries 18a to 18d are injected into the reaction cells 6a to 6d positioned in the respective lower perpendicular directions of the capillaries 18a to 18d.

Fig. 4 is a vertical sectional view taken along the alternate long and short dash line A-A' in Fig. 2 in a perpendicular direction, which shows the substantial part of the luminescence detection apparatus 1 shown in Fig. 2 from the direction of the arrows.

The solution-dispensing portion 19 is composed of the reagent tubes 17, the capillaries 18 communicating with the reagent tubes 17, a gas passage 20 formed within the reagent tube holder 2, the rotating seal 5, the pressure pipe 4, and a pressure source (not shown).

Four convex portions 21 for hermetically sealing the openings of the reagent tubes are formed in the under surface of the reagent tube holder 2. After the openings are hermetically sealed, a gas inlet 20a that is the lower end of the gas passage 20 is formed on the protrusion side of each of the convex portions 21 that comes in no contact with the internal wall of each reagent tube. The gas passage 20 branches off in the reagent tube holder 2 according to the number of the gas inlet 20a, that is, the number of the reagent tube 17 installed in the reagent tube holder 2. It is preferred that the gas inlet 20 should be provided at an angle that does not permit the direct discharge of gas to the surface of the reaction solution in order to prevent the reaction solution from scattering.

An upper end 20b of the gas passage 20 is connected via the rotating seal 5 to the pressure pipe 4. The gas passage 20 allows the reagent tube 17 to communicate with the pressure pipe 4. The pressure pipe 4 is connected via a pressure-switching device such as an electromagnetic valve (not shown) to a pressure source (not shown) such as a high-pressure cylinder or a compressor having 3 atm. (0.3 MPaG) or more. The rotating seal 5 is provided in the middle of the rotating shaft 3, and the pressure pipe 4 is not distorted even when the rotating shaft 3 revolves.

The reaction solutions in the reagent tubes 17 are preferably delivered to the reaction cells 6 by constant-pressure liquid delivery.

The constant-pressure-pressurized liquid delivery method employs compressed air (approximately 1 to 2 atmosphere(s) (0.1 to 0.2 MPaG)) from the pressure source to perform liquid delivery by the application of air pressure for approximately a few seconds with a pressure-switching device such as an electromagnetic valve.

Because the pressure sent from the pressure source via the pressure pipe 4 is uniformly fed into all of a plurality of reagent tubes 17, the reagent solutions can simultaneously be discharged from all of the reagent tubes 17 by one-time work for feeding gas. Such construction can simplify the luminescence detection apparatus 1.

The discharge rate of the reagent tube 17 by the constant-pressure-pressurized liquid delivery method used in the present embodiment is determined according to the following Hagen-Poiseuille equation (1) :

$$Q=\Delta P \cdot \pi \cdot r^4 \cdot t/(8\ \mu L)\ \ldots\ (1).$$

In the equation (1), ΔP represents applied pressure; r represents the internal diameter of a narrow tube of small diameter; t represents the duration of pressurization; μ represents the viscosity of a solution; and L represents the length of the narrow tube of small diameter.

As shown in the equation (1), capillaries (narrow tubes of small diameter) 18 are members for controlling flow rates in the constant-pressure-pressurized liquid delivery method. Therefore, the selection of capillaries 18 with varying internal diameters and lengths allows the adjustment of flow rates.

For example, the use of the capillary 18 with an internal diameter of 25 μm and a length of 20 mm is preferred for satisfying the conditions: the use of low pressure in the order of atmospheric pressure (2 atm. (0.2 MPaG) or less), the duration of pressurization of 2 seconds or less, and a discharge rate of 0.2 μL or less.

The rotating shaft 3 revolves with a rotating motor 22 as driving force. Since the reagent tube holder 2 is mounted on the upper portion of the rotating shaft 3 as described above, the reagent tube holder 2 and the reagent tubes 17 installed in the reagent tube holder 2 also revolve with the revolution of the rotating shaft 3.

Four through-holes 23 are formed in the internal portion of the rotating shaft 3 along the shaft direction in order to house four reagent tubes 17 installed in the reagent tube holder 2.

The rotating motor 22 can be controlled by motor-controlling means (not shown). For example, the motor-controlling means may be a controller (CPU) implementing a program that defines an angle of rotation, a time interval between rotation events, and so on. In the present embodiment comprising four capillaries 18 and for reaction cells 6, preferred is programmed control that allows the rotation of the capillaries 18 and the reaction cells 6 at a 90° angle at predetermined periods. Alternatively, instead of the use of the time interval, control may be conducted by a program that defines the capillaries 18 and the reaction cells 6 so that they are turned at a predetermined angle, every time detected luminescent intensity decays at or under a given value.

The reaction cells 6 each have a bottom portion made of a transparent member. The reaction cells 6 are inserted from above and engaged in through holes circumferentially formed within the reaction cell holder 7. As a result, the reaction cells 6 are constructed to allow the detection of lights generated in the reaction cells 6 at a position below the bottom portions of the reaction cells 6. The bottom portions of the reaction cells 6 may be substantially transparent and are not necessarily required to pass lights of all wavelengths therethrough. The bottom portions of the reaction cells 6 may allow the transmission of at least a light of a wavelength desired to be detected. Moreover, the transmission of a light with 100% efficiency is not necessarily required. If the accurate transmittance of light is known, a measurement value may be corrected on the basis of this transmittance after measurement.

The light-detecting portion 29 comprises at least the photosensors 24 and an amplifier 25 electrically connected for amplifying a signal detected by the photosensors 24 and is housed in the shield case 15 mounted on the base 13.

The photosensors 24 are arranged in a one-to-one correspondence with the reaction cells 6 in the lower perpendicular directions of the reaction cells 6. By arranging the photosensors 24 in a one-to-one correspondence with the reaction cells 6, lights can be detected with high sensitivity regardless of the intervals, arrangement, and size of reaction cells 6. Although the amplifier 25 assumes the construction where four photosensors 24 are connected to one amplifier 25 in consideration of an output error occurring in each amplifier 25, the amplifier 25 is not necessarily limited to this construction.

In the present embodiment, the photosensors 24 are used as contact photosensors for enhancing light-gathering efficiency in a simple manner without the use of a complicated optical system that employs lens and so on, in such a way that the photosensors 24 are kept as close to the reaction cells 6 as possible to increase a light-receiving angle. Therefore, the luminescence detection apparatus is constructed to be capable of attaining reduction in the number of components and high light-gathering efficiency in a simple structure that does not require the adjustment of an optical axis. However, depending on the construction of the apparatus, a lens, a light-gathering device, or the like, is appropriately placed between the reaction cells 6 and photosensors 24 without limitations.

In the present embodiment, the photosensors 24 are arranged in proximity to the reaction cells 6 as described above, and the amplifier 25 of high amplification is used. Therefore, the detection of a noise (very small false current) by electrostatic induction becomes a problem. This noise tends to be detected during the injection of reagent solutions or during the vibration of the reaction cell holder 7 or the tray 8 involved in stirring described below.

For eliminating this noise, the luminescence detection apparatus in the present embodiment is allowed to comprise a transparent conductive layer 26a between the reaction cells 6 and photosensors 24 that corresponds to these reaction cells 6.

Fig. 5(a) is an enlarged fragmentary sectional view illustrating the attachment mode of the transparent conductive layer 26a of the present embodiment.

As shown in Fig. 5(a), the luminescence detection apparatus is constructed so that a quartz glass plate 26 having excellent light transmittance and chemical stability is provided in the top surface of the shield case 15 containing the upper perpendicular direction of the photosensor 24 and the under surface of the quartz glass plate 26 is coated with the transparent conductive layer 26a consisting of ITO (indium oxide) or $SnO_2$. As described above, the transparent conductive layer 26a is not fixed in the reaction cells 6 but provided separately from the reaction cells 6. This can reduce costs required for the reaction cells 6 and can provide the reaction cells 6 that are disposable. The transparent conductive layer 26a is grounded face-to-face with the shield case 15 and attached to the shield case 15 with a conductive adhesive or the like.

In the present embodiment, the transparent conductive layer 26a is constructed separately from the reaction cell 6 and however, is not limited to this construction. For example, the transparent conductive layer 26a may be formed integrally with the reaction cell 6.

Here, Fig. 5(b) is an enlarged fragmentary sectional view illustrating the application of the attachment mode of a typical transparent conductive layer 26a. In the present embodiment as well, for example, the luminescence detection apparatus can be constructed so that the quartz glass plate 26 is applied to a member for the bottom portion of the reaction cell 6 as shown in Fig. 5(b) and the under surface of the quartz glass plate 26 is coated with the transparent conductive layer 26a consisting of ITO or $SnO_2$, when the transparent conductive layer 26a does not assume the construction as shown in Fig. 5(a) where the transparent conductive layer 26a is provided separately from the reaction cell 6.

In the present embodiment, the amount of the reagent solution injected at a time into the reaction cell 6 is approximately one hundredth the amount of the reaction solution dispensed in advance in the reaction cell 6 and is relatively small. Thus, for properly detecting luminescent intensity caused by reaction, it is preferred to stir the reaction cell 6 immediately after the injection of the reagent solution without waiting for the spontaneous diffusion of the reagent solution.

One example of stirring means can include a vibration motor.

The vibration motor (not shown) is installed in the reaction cell holder 7 that holds the reaction cells 6 or the tray 8 that holds the reaction cell holder 7. All of the reaction cells 6 can collectively be stirred by contacting and vibrating the reaction cell holder 7 or the tray 8 with the vibration motor. A small vibration motor used in, for example, a cellular phone can be utilized as the vibration motor.

Another example of the stirring means can include magnetic particles.

Specifically, magnetic particles are added into the reaction cells 6 and moved by the application of a magnetic field to the insides of the reaction cells 6 by magnetic field generation means (not shown) provided outside the reaction cells 6, thereby stirring the reaction solutions. In this case, stirring for a few seconds after injection may be performed.

However, when the reaction cells 6 are stirred with the reaction motor, it is necessary to give consideration to the case in which, due to the vibration, the transparent conductive layer 26a is estranged from the shield case 15 and thereby prevented from being grounded in the shield case 15. Thus, the influence of stirring with the vibration motor on each attachment mode of the above-described transparent conductive layer 26a will be described with reference to Experimental Examples.

It is noted that stirring with the magnetic particles does not cause the vibration of the reaction cells 6, so that the above-described problem may not be considered.

[Experimental Example 1]

In Experimental Example 1, experiments have been conducted for showing the influence of stirring with the vibration motor when the attachment modes of the transparent conductive layer 26a of the present embodiment shown in Fig. 5(a) and a typical transparent conductive layer 26a shown in Fig. 5(b) are applied.

[Detection conditions]

The performance of the quartz glass plate 26 coated with the transparent conductive layer 26a, which was used in Experimental Example 1 has 90% or more transmittance at a wavelength of 450 to 600 nm and a sheet resistivity of 1000 to 1500 Ω. Photodiode S1133-01 manufactured by Hamamatsu Photonics was used as the photosensor 24 whose output was amplified to $1 \times 10^{10}$ using a current-to-voltage conversion amplifier (OPA129UB, manufactured by BURR BROWN) and a resistivity of 10 GΩ and subsequently amplified to a total gain of $1.8 \times 10^{11}$ using an operational amplifier in the second stage (OP07, manufactured by ANALOG DEVICES).
Experimental Example 1 is measurement for detecting a noise and as such, does not use reagent solutions and reaction solutions.

[Experimental result]

Fig. 7(a) shows a result of measuring a noise in the attachment mode of the transparent conductive layer 26a of the present embodiment (see Fig. 5(a)), while Fig. 7(b) shows a result of measuring a noise when the attachment mode of the typical transparent conductive layer 26a is applied (see Fig. 5(b)). In both Fig. 7(a) and Fig. 7(b), no noise is detected. Namely, because stirring by vibration is not performed in both cases, the transparent conductive layers 26a are grounded in the shield cases 15 and their function of blocking noises effectively works.
Fig. 6(a) is a schematic view illustrating the state of stirring with the vibration motor in the attachment mode of the transparent conductive layer 26a of the present embodiment (see Fig. 5(a)). A result of measuring a noise during stirring is shown in Fig. 7(c). In Fig. 7(c), no noise is detected. Even if the reaction cell 6 moves up and down when vibrated and stirred with the vibration motor, the transparent conductive layer 26a is attached to the shield case 15 and therefore, its function of blocking noises effectively works.
Fig. 6(b) is a schematic view illustrating the state of stirring with the vibration motor when the attachment mode of the typical transparent conductive layer 26a is applied (see Fig. 5(b)). A result of measuring a noise during stirring is shown in Fig. 7(d). In Fig. 7(d), a noise was detected (which shows that signal intensity in the order of -0.04 V was detected on 15 seconds). This is because the reaction cell moves up and down by vibration stirring, so that the transparent conductive layer formed in the bottom part of the reaction cell is estranged from the shield case 15 and thereby prevented from being grounded in the shield case 15.
Thus, the results of Experimental Example 1 have demonstrated that the attachment mode of the transparent conductive layer 26a of the present embodiment (see Fig. 5(a)) is preferred when the vibration motor is used as stirring means.

[Experimental Example 2]

In Experimental Example 2, experiments have been conducted for investigating the optimum conditions of stirring with the vibration motor.

[Detection conditions]

The amount of the reaction solution used in the reaction was 20 μL, and 0.2 μL of the reagent solution (deoxynucleotide solution) was injected. The amount of sample DNA (template DNA) remaining after the same reagent solution (deoxynucleotide solution) was injected again for further reaction was regarded as the amount of unreacted sample DNA (template DNA). See "Table 1" in Example described below, for the compositions of the reagent solution and the reaction solution.
The settings of the apparatus and so on were conducted in accordance with the detection conditions of Experimental Example 1.

[Experimental result]

Fig. 8 shows correlation between the frequency of the vibration motor and the percentage of the DNA strand unreacted.

When the stirring frequency of the vibration motor was 20 Hz or more, the percentage of the DNA strand unreacted fell off at or below a few percent. As can be seen, especially in a stirring frequency of 25 Hz or more, the percentage of the DNA strand unreacted is almost 0%, and the reaction completely proceeds. The use of larger stirring frequencies, though graphical illustration is omitted, causes the reaction cell 6 not to vibrate and, on the contrary, reduces reaction efficiency. In a stirring frequency of 100 Hz or more, 10% or more DNA strand is unreacted.

It will be recognized that various changes can be made to the present invention described above within the technical concept of the present invention. For example, although the present embodiment is expressed in the construction where the reaction cells 6 do not move and the capillaries 18 rotate, the luminescence detection apparatus may assume construction where the capillaries 18 do not move and the reaction cells 6 rotate.

Although the number of the reaction cell is set to four in response to types of bases in the present embodiment illustrated above, the reaction cells in multiple of 4 such as 8, 12, or 16 may be provided. Furthermore, the number of the reaction tube may appropriately be increased with increase in the number of the reaction cell. Hereinafter, Modification Examples made to the number of the reaction cell will be described, appropriately referring to the drawings.

Fig. 9 is an illustration of Modification Example 1 to the number of the reaction cell.

Modification Example 1 assumes construction where, in addition to four reaction cells 106a to 106d, four reaction cells 106e to 106h are further provided in the respective outer circumferential directions of the reaction cells 106a to 106d. Moreover, capillaries 118a to 118h communicating with reagent tubes 117a to 117h are arranged in the respective upper perpendicular directions of the reaction cells 106a to 106h. In Modification Example 1, each of reagent tubes 117a to 117d and each of reagent tubes 117e to 117h contain each one (but different from those in the other tubes) of four different deoxynucleotide solutions (containing dATP, dCTP, dGTP, or dTTP) or derivatives thereof.

Such construction allows increase in the number of the reaction cell 6 without increasing the number of the rotating shaft 3 and therefore allows increase in the number of a sample that can be analyzed at a time.

Fig. 10 is an illustration of Modification Example 2 to the number of the reaction cell.

When the capillaries adjacent to each other along the radial direction of the reaction cell holder (e.g., 218a and 218e) discharge identical reagent solutions as shown in Fig. 10, the apparatus may be constructed so that a plurality of capillaries 218 are allowed to communicate with one reagent tube 217. Such construction allows reduction in the number of the reagent tube 217 and therefore allows the simple replacement of the reagent solution.

Fig. 11 is an illustration of Modification Example 3 to the number of the reaction cell.

In Modification Example 3, the reaction cells 306a to 306h in multiple of 4 are arranged at equal intervals on the same circumference. Moreover, capillaries 318a to 318h communicating with reagent tubes 317a to 317h are arranged in the respective upper perpendicular directions of the reaction cells 306a to 306h. In this case, the capillaries may be arranged so that the capillaries in order of, for example, 318a, 318b, 318c, 318d, 318e, 318f, 318g, and 318h discharge reagent solutions containing dATP, dGTP, dCTP, dTTP, dATP, dGTP, dCTP, and dTTP, respectively, with them turned at a 45° angle. Such construction allows increase in the numbers of the reaction cell 6 and the reagent tube 17 without increasing the numbers of the rotating shaft 3 and the solution-dispensing portion 19. As compared to the angle of rotation of 90° in the above-described embodiment, the work of the rotating motor 22 that drives the rotating shaft 3 can be reduced.

The application of a 96-well microplate with 8 wells per column versus 12 wells per row to the reaction cell will be described as Modification Example 4, though not illustrated, to the number of the reaction cell. Modification Example 4 can assume construction where one solution-dispensing portion 19, that is, four capillaries 18 shown in Fig. 3 are successively arranged in the respective upper perpendicular directions of a total of 4 wells of 2 vertically-adjacent wells and 2 horizontally-adjacent wells in the 96-well microplate. Such construction allows the use of up to 24 solution-dispensing portions 19, that is, 96 reagent tubes 17 and 96 capillaries 18 respectively communicating with the reagent tubes 17, to analyze 96 samples at a time.

When a commercially-available microtiter plate is applied to the reaction cell 6, it is preferred that partitions for crosstalk prevention should be provided in the reaction cell holder 7 in order to prevent the crosstalk of luminescences between adjacent wells (reaction cells).

Alternatively, when the number of the reaction cell 6 is more than the number of the capillary 18, the solution-dispensing portion 19 may be provided with an actuator and constructed to move to four reaction cells 6 that follow, every time the analysis of four reaction cells 6 is completed.

Description of Preferred Embodiment

Next, Example where the effect of the luminescence detection apparatus 1 of the present invention has been confirmed will be described more fully, taking DNA base sequencing as an example.

In the present Example, a base sequence was determined with the luminescence detection apparatus 1 comprising four reaction cells 6 and four reagent tubes 17 in response to four different dNTPs in the construction of the present embodiment as shown in Fig. 3. Thus, the reaction cells 6, the reagent tubes 17, and the capillaries 18 in the present Example may be arranged as in Fig. 3 and will be thus described with reference to the figure.

The performance of the quartz glass plate 26 coated with the transparent conductive layer 26a, which was used in the present Example has 90% or more transmittance at a wavelength of 450 to 600 nm and a sheet resistivity of 1000 to 1500 Ω. Photodiode S1133-01 manufactured by Hamamatsu Photonics was used as the photosensor 24 whose output was amplified to 1 x $10^{10}$ using a current-to-voltage conversion amplifier (OPA129UB, manufactured by BURR BROWN) and a resistivity of 10 GΩ and subsequently amplified to a total gain of 1.8 x $10^{11}$ using an operational amplifier in the second stage (OP07, manufactured by ANALOG DEVICES).

The principle of DNA base sequencing conducted in the present apparatus is the detection of pyrophosphate (PPi) generated during the extension reaction of a primer complementarily bound with DNA by a bioluminescent reaction method of a luciferin/luciferase system. Hereinafter, the reaction scheme will be described.

A primer for extension reaction is hybridized with sample DNA to be measured. DNA polymerase is used to perform DNA complementary strand extension reaction, with the sample DNA and the primer for extension reaction hybridized. On this occasion, when deoxyribonucleotide triphosphate (or analog nucleic acid) solutions used as reagent solutions are added successively but one at a time, PPi is generated, only if DNA complementary strand extension reaction occurs. The PPi generated from the DNA complementary strand extension reaction is converted to ATP by ATP sulfurylase in the presence of APS (adenosine 5'-phosphosulphate) while $SO_4^{2-}$ (sulfate ion) is generated. The ATP to which the PPi has been converted by ATP sulfurylase is utilized in the oxidation reaction of luciferin by luciferase in the presence of a magnesium ion and $O_2$ (oxygen), which emits light. During the reaction, $CO_2$ (carbon dioxide) is generated while ATP is converted to PPi and AMP and luciferin is converted to oxyluciferin. The PPi generated following the bioluminescence of the luciferin/luciferase system is converted again to ATP by ATP sulfurylase in the presence of APS. Therefore, luminescent reaction repeatedly occurs to maintain luminescences. The present DNA base sequencing is a method by which dNTP solutions are added by turns and repeatedly to determine bases one by one in the base sequence, with the presence or absence of luminescence detected (see Ahmadian, A. et al., Analytical Biochemistry 280 (2000) 103-110; and Zhou, G. et al., Electrophoresis 22 (2001) 3497-3504), and can readily be conducted using the luminescence detection apparatus 1 of the present invention.

Hereinafter, a specific measurement method in the present Example will be described.

In the present Example, a gene (thiopurine S-methyltransferase gene) shown below was used as sample DNA, and a sequencing primer that had a sequence complementary to the sequence of the 3' end of the gene was also used.

Thiopurine S-methyltransferase gene:

```
5'-
tgttgaagtaccagcatgcaccatgggggacgctgctcatcttcttaaagatttg
atttttctcccataaaatgtttttctctttctggtaggacaaatattggcaaat
ttgacatgatttgggatagaggagcattagttgccattaatccaggtgatcgcaa
atggtaagtaattttt-3'
```

Sequencing primer:
5'-aaaattacttaccatttgcgatca-3'

The compositions of the reagent solutions and reaction solution used in the present Example are shown in "Table 1".

It will be recognized that the compositions and concentrations of the reagent solutions and reaction solution used herein are described as an example of measurement methods and can appropriately be changed according to the construction of apparatuses, sample DNA, and so on.

[Table 1] Composition of reagents in each solution

| | |
|---|---|
| Reagent solution | dNTP (300 μM dATP αS, 200 μM CTP, 200 μM dGTP, or 200 μM dTTP)<br>5.0 μM APS<br>10 mM Tris-acetate buffer, pH 7.75 |
| Reaction solution | Sample DNA<br>0.1 M Tris-acetate buffer, pH 7.75<br>0.5 mM EDTA<br>5.0 mM magnesium acetate<br>0.1% (v/v) bovine serum albumin<br>1.0 mM dithiothreitol<br>0.1 U/μl DNA polymerase 1, Exo-klenow Fragment<br>1.0 U/ml ATP sulfurylase<br>2.0 mg/ml luciferase<br>20 mM D-luciferin |

A total of 31 μL (of which 1 μL was sample DNA provided with primer annealing treatment and was added just before measurement) of the reaction solution was dispensed in each of the reaction cells 6, to which 0.3 μL of each of the reagent solutions (deoxynucleotide solutions) was then injected successively to measure luminescent reaction.

Here, the sample DNA provided with primer annealing treatment is sample DNA (400 fmol) that has been hybridized (95°C, 20 sec. → 60°C, 120 sec. → room temperature) with the sequencing primer in an amount 1.5 times the amount of the sample DNA in an annealing buffer (10 mM Tris-acetate buffer (pH 7.75), 2 mM magnesium acetate). However, a method for hybridization between the sample DNA and the sequencing primer is not limited to the foregoing. For example, predetermined temperature operation required for hybridization may be performed after the sample DNA and the sequencing primer are added to the reaction cell 6.

In the present Example, the identical reaction solution containing the identical sample DNA is dispensed into four reaction cells 6.

The reagent tubes 17a, 17b, 17c, and 17d retain a dATPαS solution, a dGTP solution, a dTTP solution, and a dCTP solution, respectively, as the reagent solutions. Moreover, each of the reagent solutions contains APS (see "Table 1").

In the present Example, an analog dATPαS is used instead of dATP. The dATPαS serves as a substrate as with dATP that is added to the 3' end of DNA during DNA complementary strand extension reaction to release pyrophosphate, whereas the dATPαS has substrate specificity (i.e., function as substrate) for luciferase equal to or smaller than 2 figures compared with that of dATP and as such, considerably reduces the magnitude of background noises as compared to the use of dATP. Thus, the use of dATPαS as a reagent solution instead of dATP is more preferred because of improved stability.

The reagent tubes 17a, 17b, 17c, and 17d are arranged in the upper portions of the reaction cells 6a, 6b, 6c, and 6d, respectively, immediately after the initiation of measurement.

A DNA base sequence is determined by the following procedures: dNTP solutions are simultaneously injected to the reaction solutions in four reaction cells 6; in a given time, the reagent tubes 17 are turned counterclockwise at a 90° angle; and next dNTP solutions are simultaneously injected thereto.

Turning now to Fig. 12, the order of the dNTP solutions injected to each reaction cell 6 in the present Example will be illustrated. Although dATPαS is used instead of dATP in the present Example as described above, the dATPαS is represented by dATP in the drawing for briefly illustrating the relationship among four different dNTPs.

The time interval between the injections of the reagent solutions is 30 to 90 seconds. In general, one reaction is conducted for 1 minute to ensure the progression of reaction, and the determination of one base in a base sequence requires 4 minutes. However, periods of time required for reaction and determination are appropriately changed according to the compositions of reagent solutions and reaction solutions as well as the base sequence of sample DNA.

Fig. 13 is detection data of a luminescence in each reaction cell 6 in the present Example. DNA base sequence data in Figs. 13(a), 13(b), 13(c), and 13(d) respectively correspond to the reaction cells 6a, 6b, 6c, and 6d shown in Fig. 12. Overlapping DNA base sequence data were obtained on all of the reaction cells 6. In the present Example, the base sequence of identical sample DNA is analyzed in four reaction cells 6 as described above.

The results of the present Example have demonstrated that the use of the luminescence detection apparatus 1 according to the present invention allows the simultaneous and proper determination of a DNA base sequence in all of the reaction cells 6.

The apparatus disclosed herein finds great application in industrial fields as a convenient DNA sequencer and even as a DNA inspection apparatus for single-base extension reaction or the like. In addition, the apparatus can also be exploited in bacteriological examinations by ATP measurement or as a small luminometer.

It should be further understood by those skilled in the art that although the foregoing description has been made on embodiments of the invention, the invention is not limited thereto and various changes and modifications may be made without departing from the spirit of the invention and the scope of the appended claims.

## Claims

1. A luminescence detection apparatus comprising: a plurality of reaction cells each having a substantially transparent bottom portion; a solution-dispensing portion equipped with capillaries positioned above said reaction cells which are put into a one-to-one correspondence with said reaction cells; and a light-detecting portion having a plurality of light-sensing elements which are put into a one-to-one correspondence with said reaction cells and arranged in proximity to the bottom surfaces of said reaction cells, wherein the light-sensing elements of said light-detecting portion detect respective luminescences in said reaction cells generated by injecting reagent solutions from said solution-dispensing portion to said reaction cells.

2. A luminescence detection apparatus comprising: a multiple of 4 reaction cells each having a substantially transparent bottom portion; a solution-dispensing portion equipped with the multiple of 4 capillaries positioned above the multiple of 4 reaction cells and put into a one-to-one correspondence with the multiple of 4 reaction cells; and a light-detecting portion having a plurality of light-sensing elements put into a one-to-one correspondence with the multiple of 4 reaction cells and arranged in proximity to the bottom surfaces of the multiple of 4 reaction cells, wherein the light-sensing elements of said light-detecting portion detect respective luminescences in said reaction cells generated by injecting reagent solutions from said solution-dispensing portion to said reaction cells.

3. A luminescence detection apparatus comprising: a plurality of reaction cells each having a substantially transparent bottom portion; a solution-dispensing portion equipped with a plurality of capillaries positioned above said reaction cells and put into a one-to-one correspondence with said reaction cells; and a light-detecting portion having a plurality of light-sensing elements put into a one-to-one correspondence with said reaction cells and arranged in proximity to the bottom surfaces of said reaction cells, wherein the light-sensing elements of said light-detecting portion detect respective luminescences in said reaction cells generated by injecting reagent solutions from said solution-dispensing portion to said reaction cells,
said solution-dispensing portion comprising: a plurality of reagent containers containing reagent solutions; said plurality of capillaries communicating with said plurality of reagent containers; a pressure source pressurizing the insides of said plurality of reagent containers; and a passage allowing said plurality of reagent containers to communicate with said pressure source, and
wherein reagent solutions are equally dispensed through discharge nozzles of said plurality of capillaries into said plurality of reaction cells by constant-pressure liquid delivery of pressurizing the insides of said plurality of reagent containers by said pressure source for a predetermined time period.

4. A luminescence detection apparatus comprising: a plurality of reaction cells each having a substantially transparent bottom portion; a solution-dispensing portion equipped with capillaries positioned above said reaction cells and put into a one-to-one correspondence with said reaction cells; and a light-detecting portion having a plurality of light-sensing elements put into a one-to-one correspondence with said reaction cells and arranged in proximity to the bottom surfaces of said reaction cells, wherein the light-sensing elements of said light-detecting portion detect respective luminescences in said reaction cells generated by injecting reagent solutions from said solution-dispensing portion to said reaction cells,
said luminescence detection apparatus further comprising:

   stirring means for stirring said reaction cells by vibrating a holding plate holding said reaction cells; and
   a transparent conductive layer provided at least between said reaction cells and said light-detecting elements put into a one-to-one correspondence with said reaction cells but provided separately from said reaction cells.

5. The luminescence detection apparatus according to claim 4, wherein said stirring means has a stirring frequency of 20 Hz or more.

6. The luminescence detection apparatus according to claim 1, wherein said reaction cells and said solution-dispensing portion are arranged on at least two disks or holding plates that rotate relatively to each other, and reagent solutions are injected from said solution-dispensing portion into said reaction cells, while said disks or said holding plates are turned.

7. The luminescence detection apparatus according to claim 1, wherein said solution dispensing portion and said reaction cells are arranged at the same intervals on the same circumference.

8. The luminescence detection apparatus according to claim 1, wherein a lens or a light-gathering device is arranged between said reaction cells and a plurality of light-sensing elements of said light-detecting portion.

9. The luminescence detection apparatus according to claim 1, wherein said luminescence detection apparatus comprises stirring means for collectively stirring said reaction cells.

10. The luminescence detection apparatus according to claim 9, wherein said stirring means vibrates a holding plate holding said reaction cells.

11. The luminescence detection apparatus according to claim 9, wherein said stirring means moves magnetic particles in said reaction cells by magnetic field generation means.

**12.** The luminescence detection apparatus according to claim 1, wherein said reagent solutions to be injected from said solution-dispensing portion are solutions containing deoxyribonucleotide triphosphates or nucleic acid analogs thereof.

**13.** The luminescence detection apparatus according to claim 12, wherein said solution-dispensing portion corresponds to said solutions to be injected containing deoxyribonucleotide triphosphates or nucleic acid analogs thereof and said solutions are injected simultaneously but separately into said reaction cells.

**14.** The luminescence detection apparatus according to claim 12 further comprising four reagent containers, wherein said four reagent containers are put into a one-to-one correspondence with respective solutions containing four different deoxyribonucleotide triphosphates or nucleic acid analogs thereof and said solutions are injected simultaneously but separately into said reaction cells.

**15.** The luminescence detection apparatus according to claim 1, wherein said solution-dispensing portion comprises: a plurality of reagent containers containing reagent solutions; said plurality of capillaries communicating with said plurality of reagent containers; a pressure source pressurizing the insides of said plurality of reagent containers; and a passage allowing said plurality of reagent containers to communicate with said pressure source,
wherein the reagent solutions are equally dispensed through discharge nozzles of said plurality of capillaries into said plurality of reaction cells by constant-pressure liquid delivery of pressurizing the insides of said plurality of reagent containers by said pressure source for a predetermined time period.

**16.** The luminescence detection apparatus according to claim 1, wherein a transparent conductive layer is placed on a light-detecting side of said light-detecting portion, and said transparent conductive layer is grounded.

**17.** The luminescence detection apparatus according to claim 1, wherein said reaction cell retains a solution containing any one of a nucleic acid sample, a primer containing a sequence complementary to a partial sequence of said nucleic acid sample, DNA polymerase, luciferin, and luciferase, and wherein said primer is hybridized to said nucleic acid sample in said reaction cell; pyrophosphate generated with progression of complementary strand extension using at least one of different deoxyribonucleotide triphosphates or nucleic acid analogs thereof and said DNA polymerase is converted to adenosine 5'-triphosphate (ATP); and a bioluminescence generated from reaction among said ATP, said luciferin, and said luciferase is detected with the light-sensing elements of said light-detecting portion.

**18.** The luminescence detection apparatus according to claim 5, wherein said reaction cell retains a solution containing any one of a nucleic acid sample, a primer containing a sequence complementary to a partial sequence of said nucleic acid sample, DNA polymerase, luciferin, and luciferase, and wherein said primer is hybridized to said nucleic acid sample in said reaction cell; pyrophosphate generated with progression of complementary strand extension using at least one of different deoxyribonucleotide triphosphates or nucleic acid analogs thereof and said DNA polymerase is converted to adenosine 5'-triphosphate (ATP); and a bioluminescence generated from reaction among said ATP, said luciferin, and said luciferase is detected with the light-sensing elements of said light-detecting portion.

FIG.1

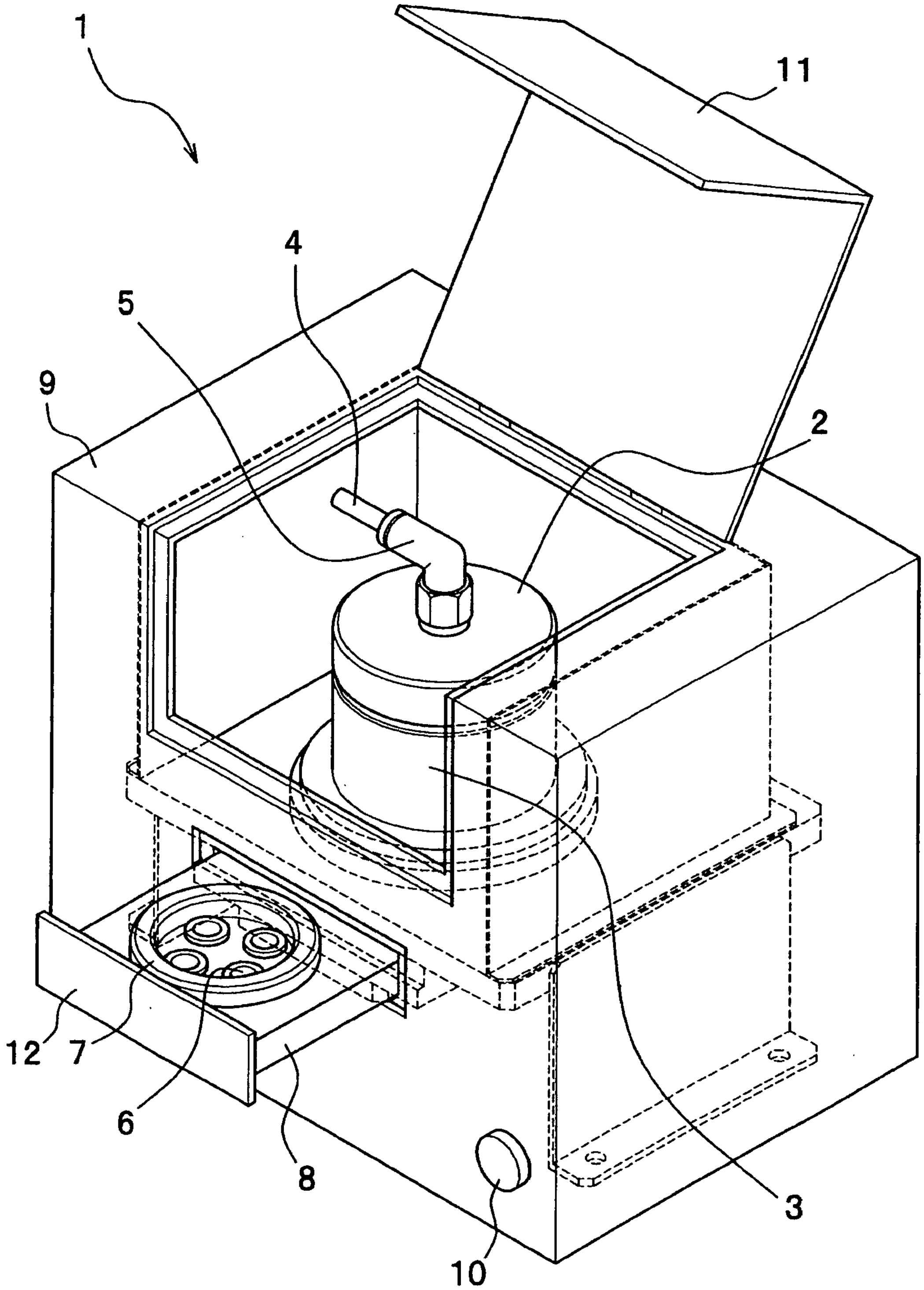

FIG.2

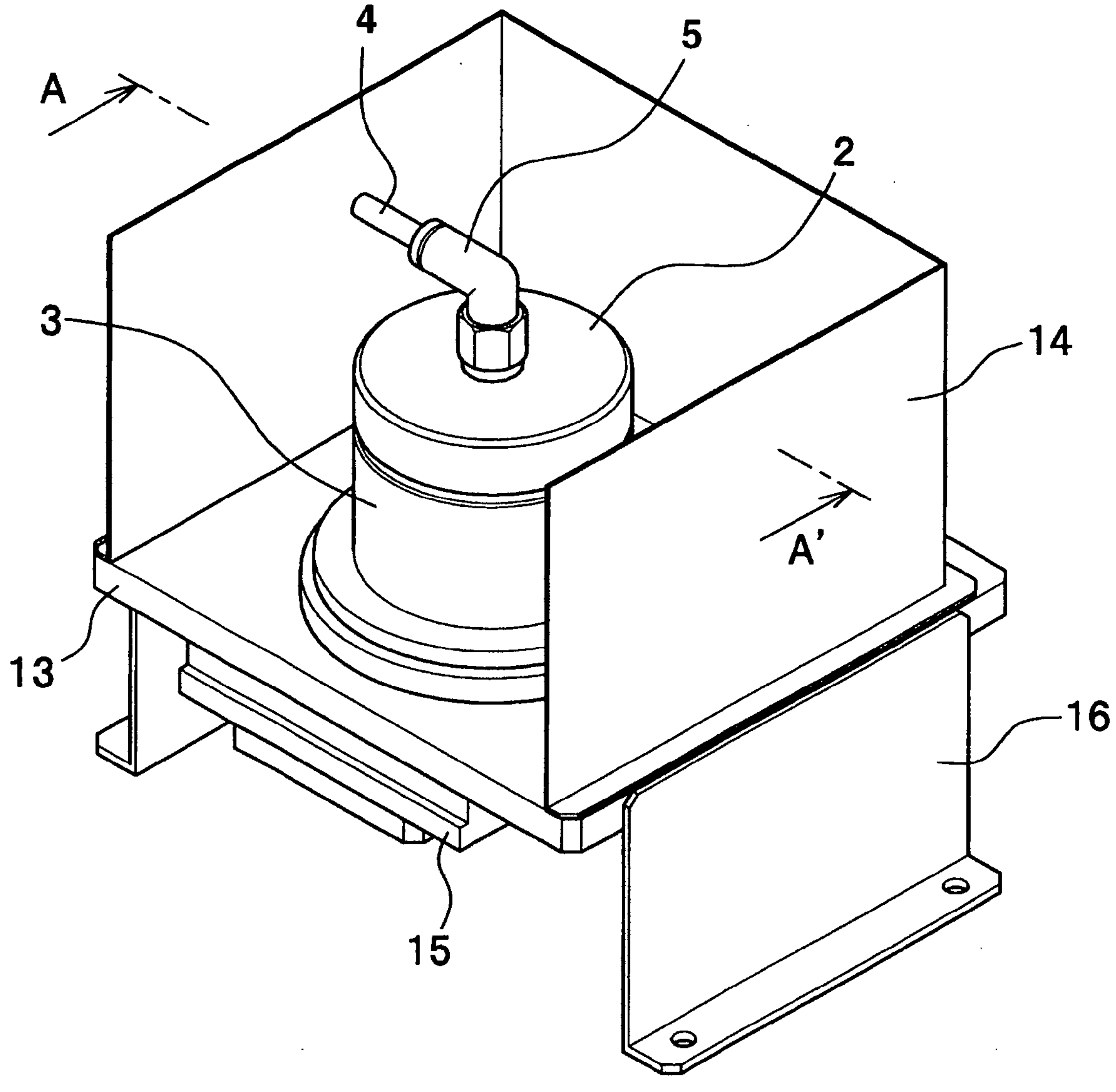

FIG.3

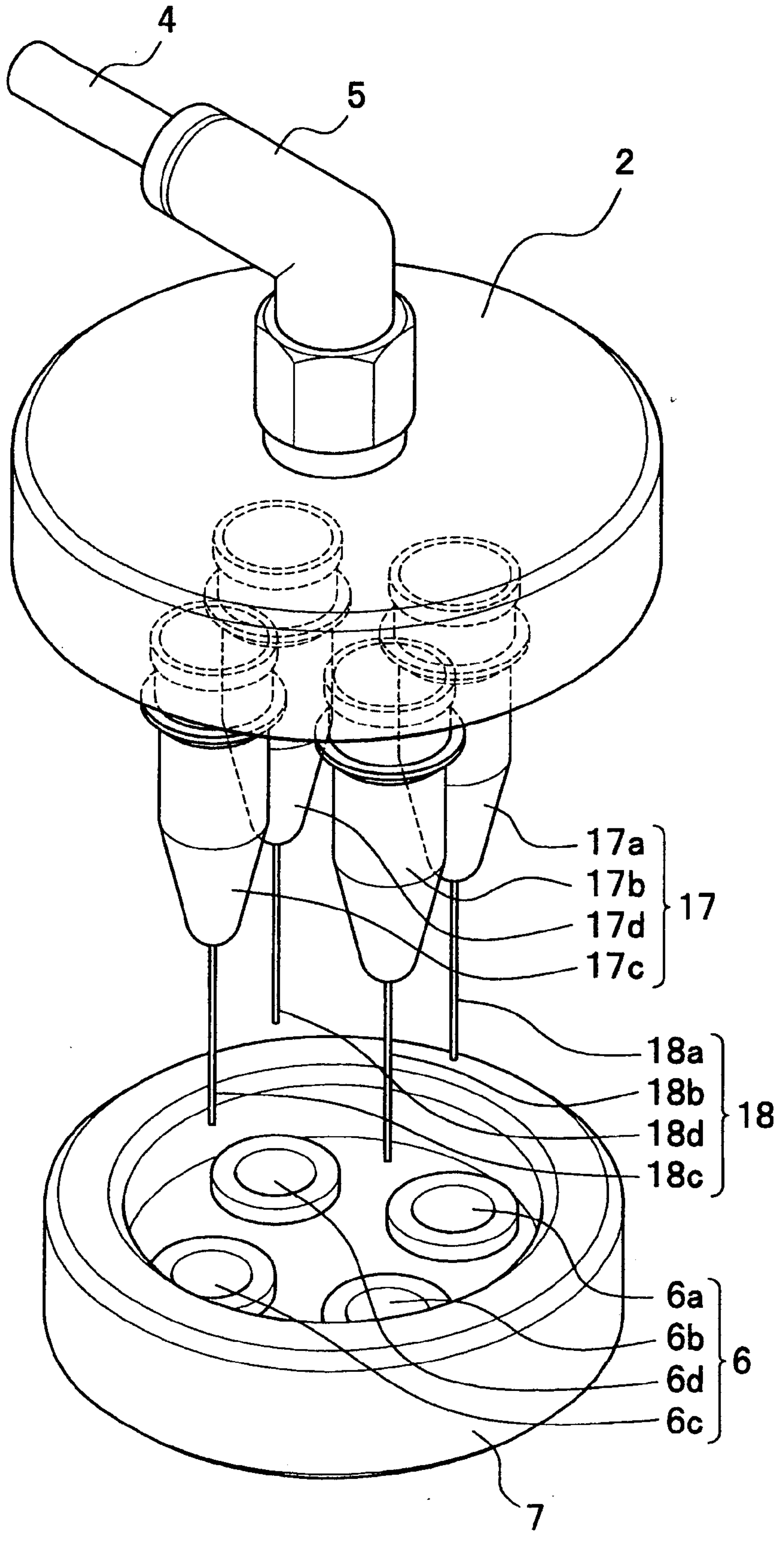

FIG.4

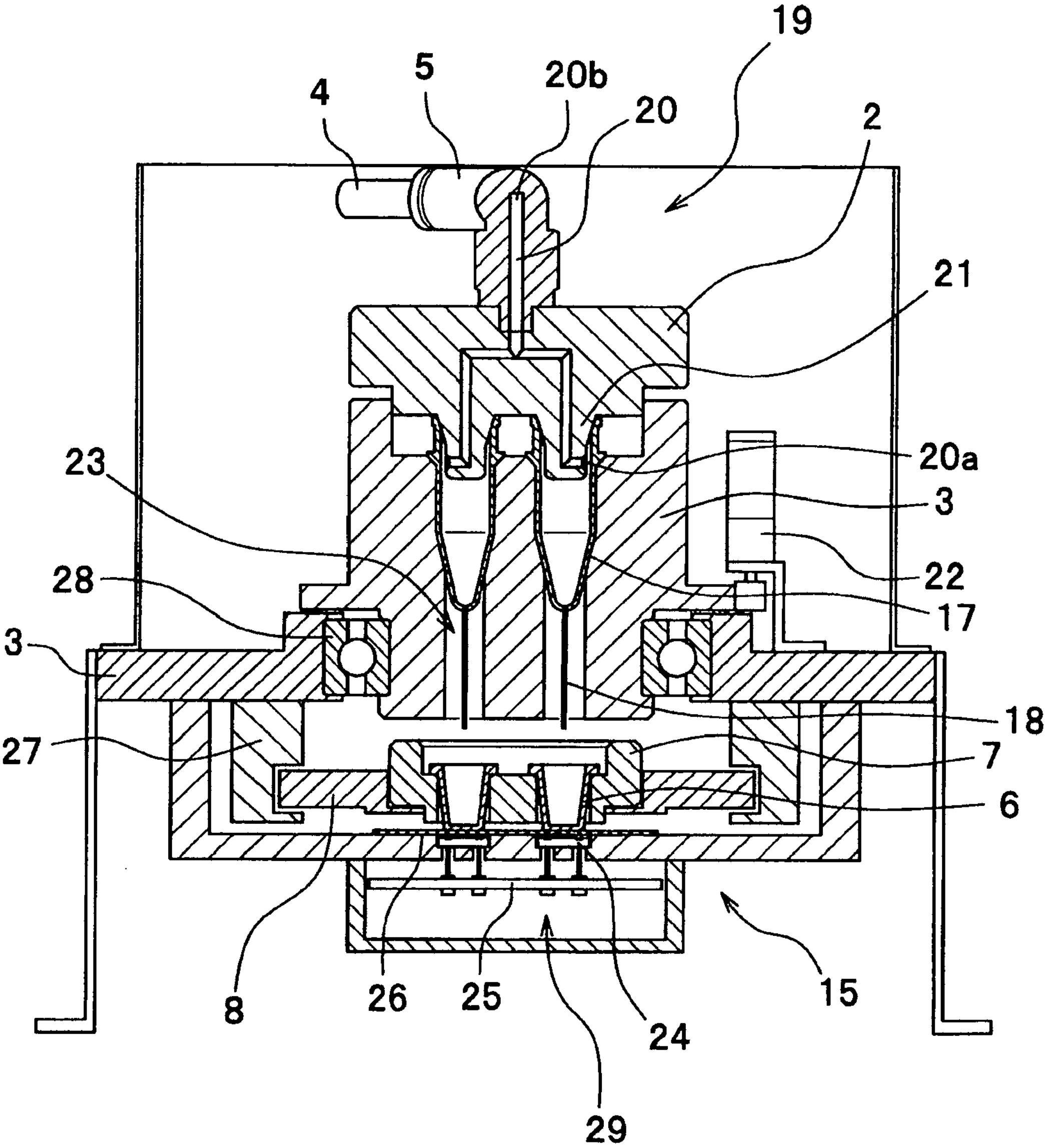

FIG.5(a)

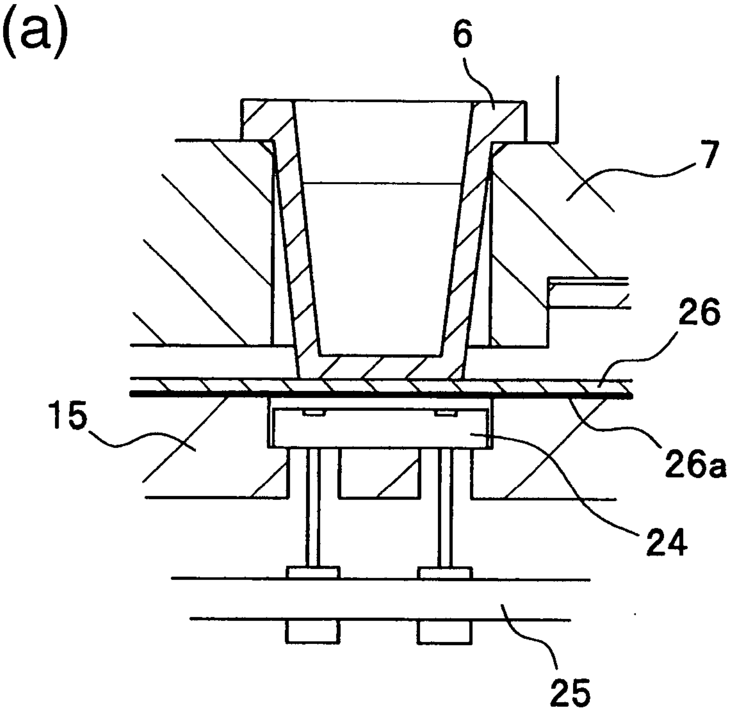


FIG.5(b)

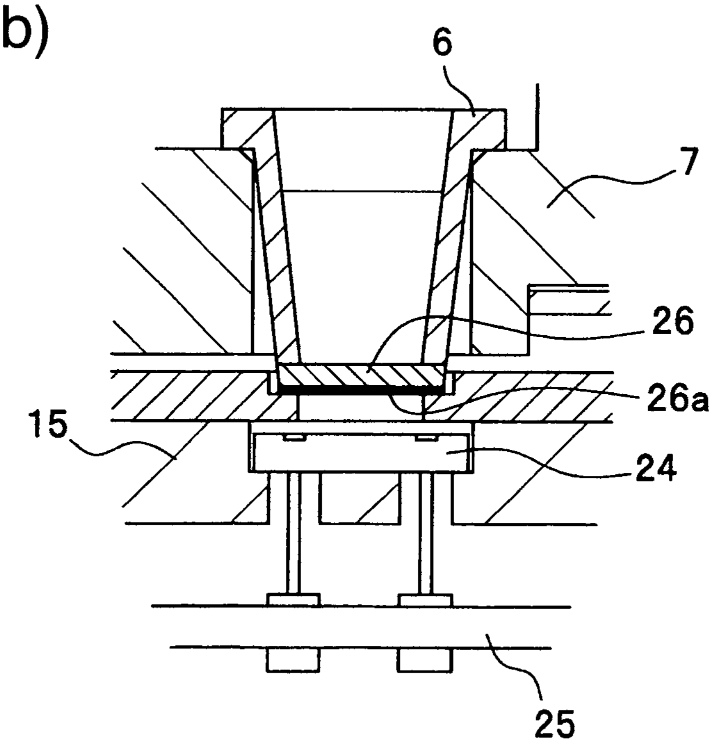

FIG.6(a)

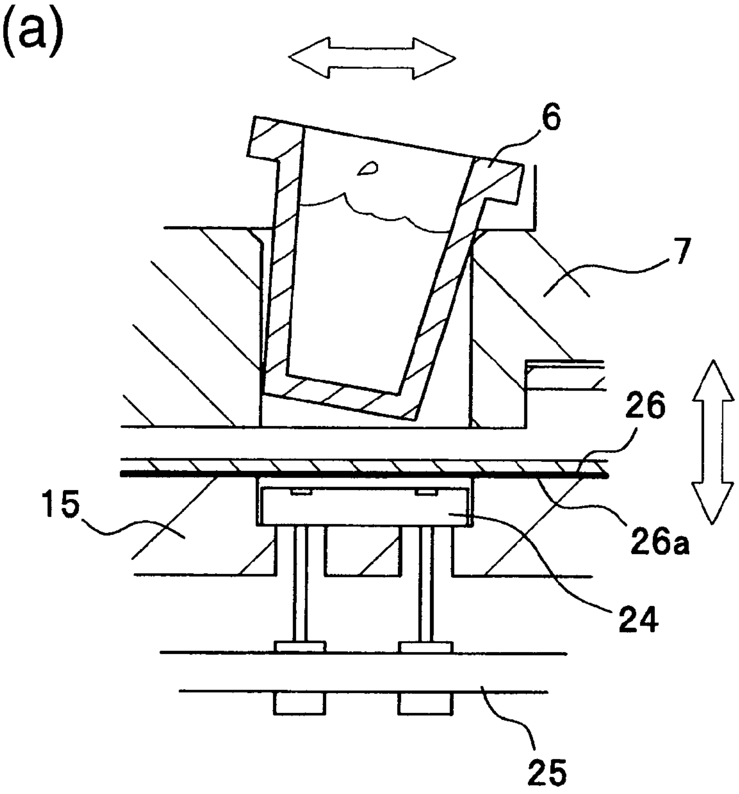


FIG.6(a)

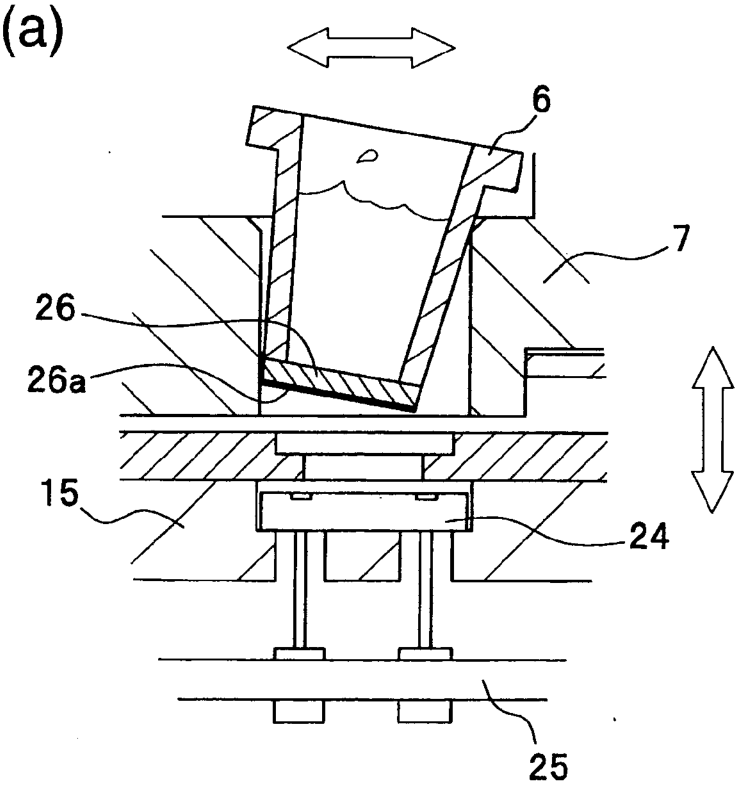

FIG.7(a)

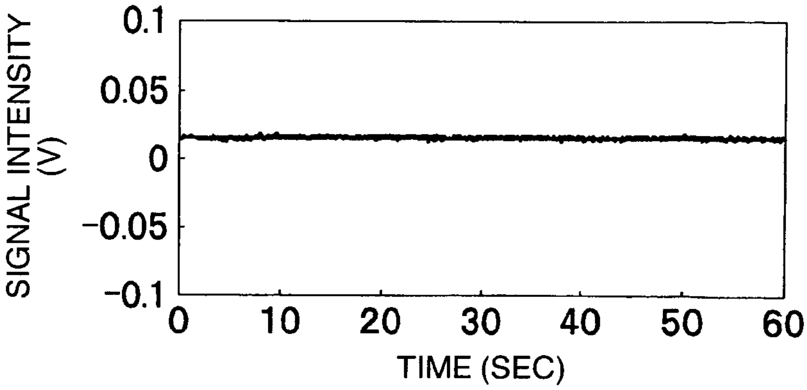


FIG.7(b)

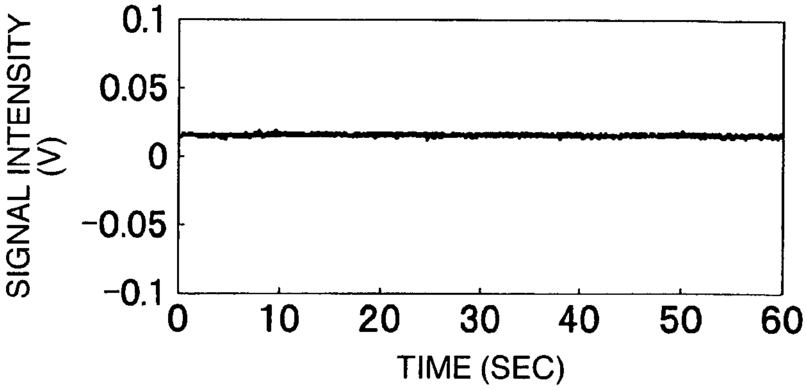


FIG.7(c)

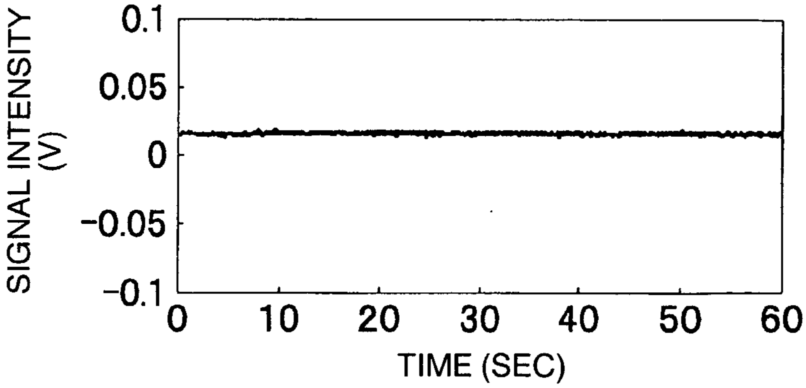


FIG.7(d)

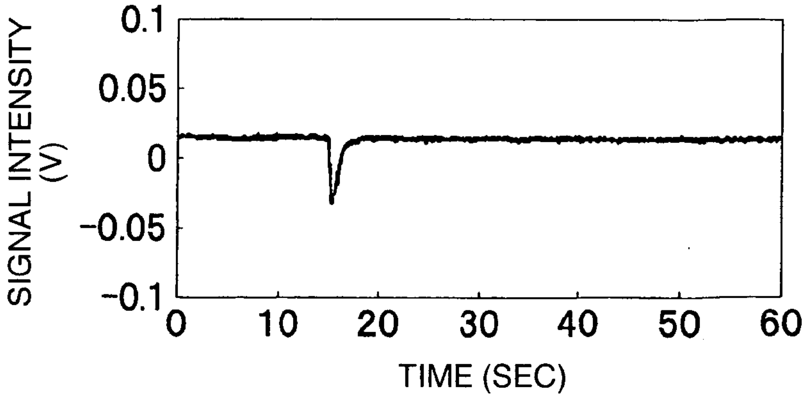

FIG.8

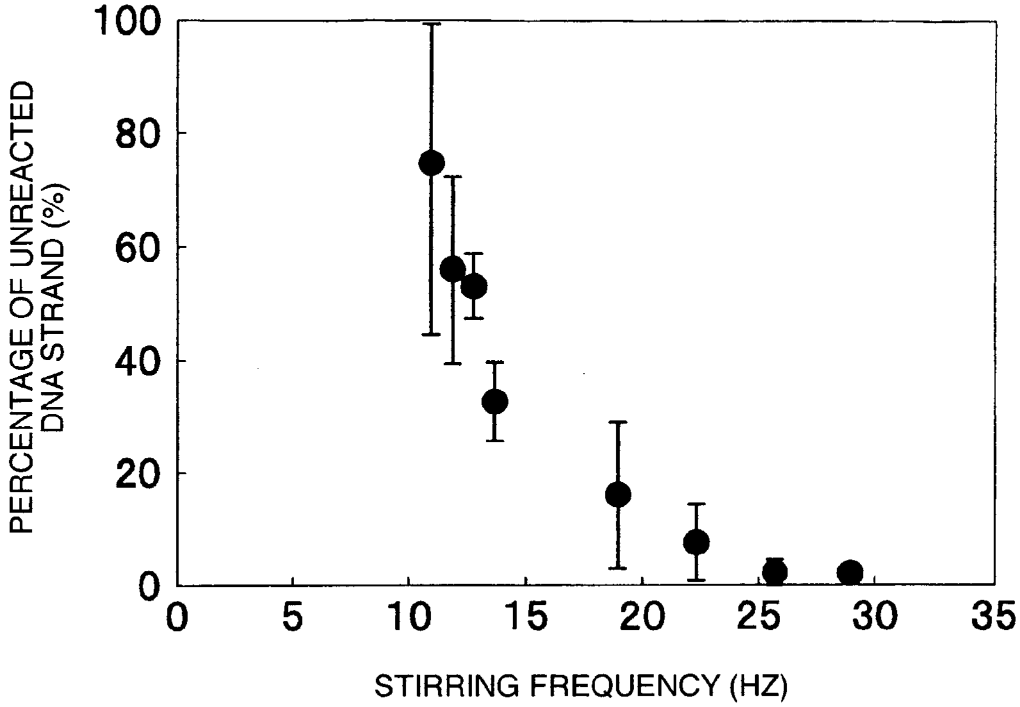
PERCENTAGE OF UNREACTED DNA STRAND (%)
100
80
60
40
20
0
0
5
10
15
20
25
30
35
STIRRING FREQUENCY (HZ)

FIG.12

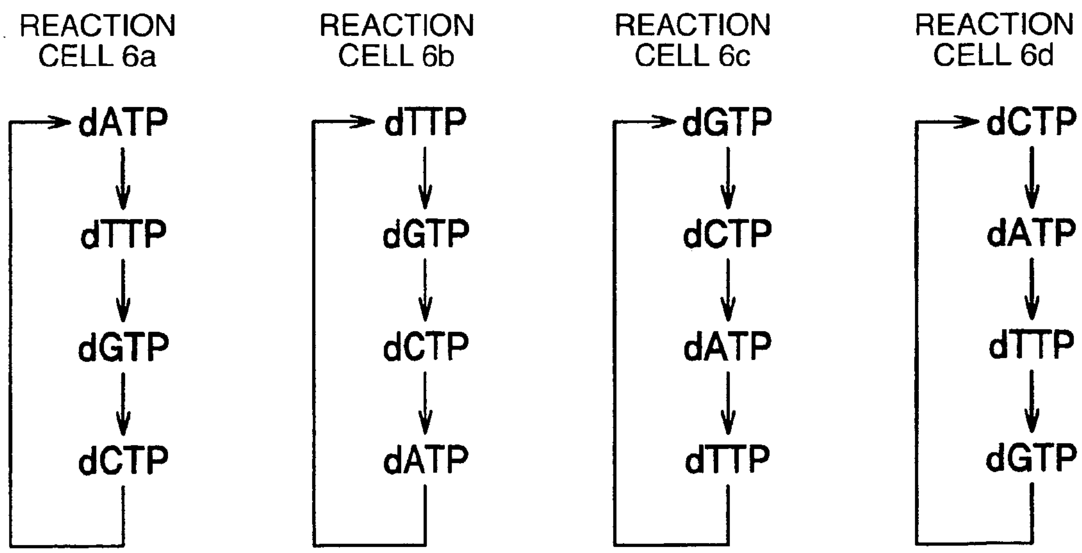
REACTION CELL 6a
dATP
dTTP
dGTP
dCTP
REACTION CELL 6b
dTTP
dGTP
dCTP
dATP
REACTION CELL 6c
dGTP
dCTP
dATP
dTTP
REACTION CELL 6d
dCTP
dATP
dTTP
dGTP

FIG.9

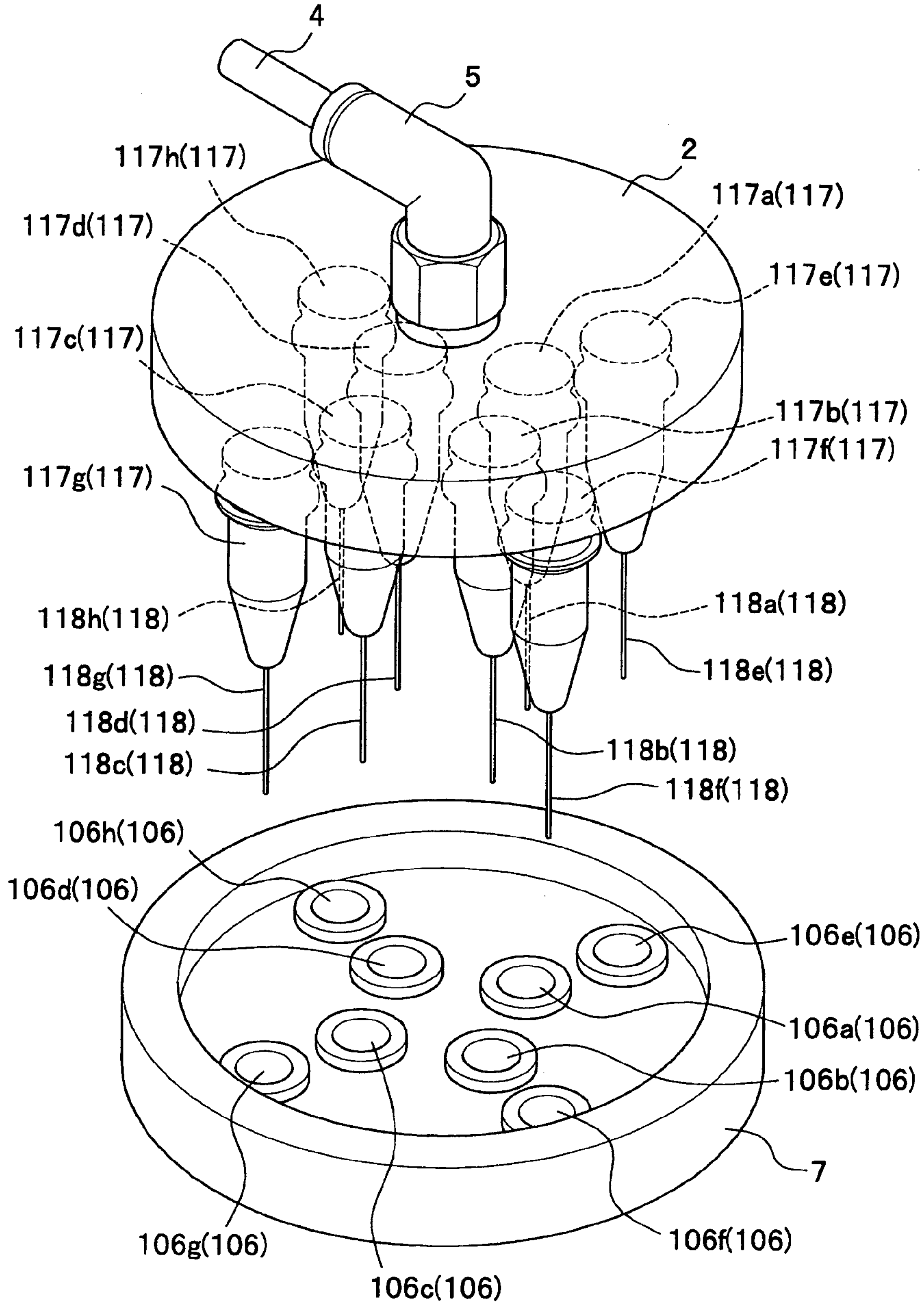
4
5
2
117h(117)
117d(117)
117a(117)
117e(117)
117c(117)
117b(117)
117f(117)
117g(117)
118h(118)
118a(118)
118g(118)
118e(118)
118d(118)
118b(118)
118c(118)
118f(118)
106h(106)
106d(106)
106e(106)
106a(106)
106b(106)
7
106g(106)
106f(106)
106c(106)

FIG.10

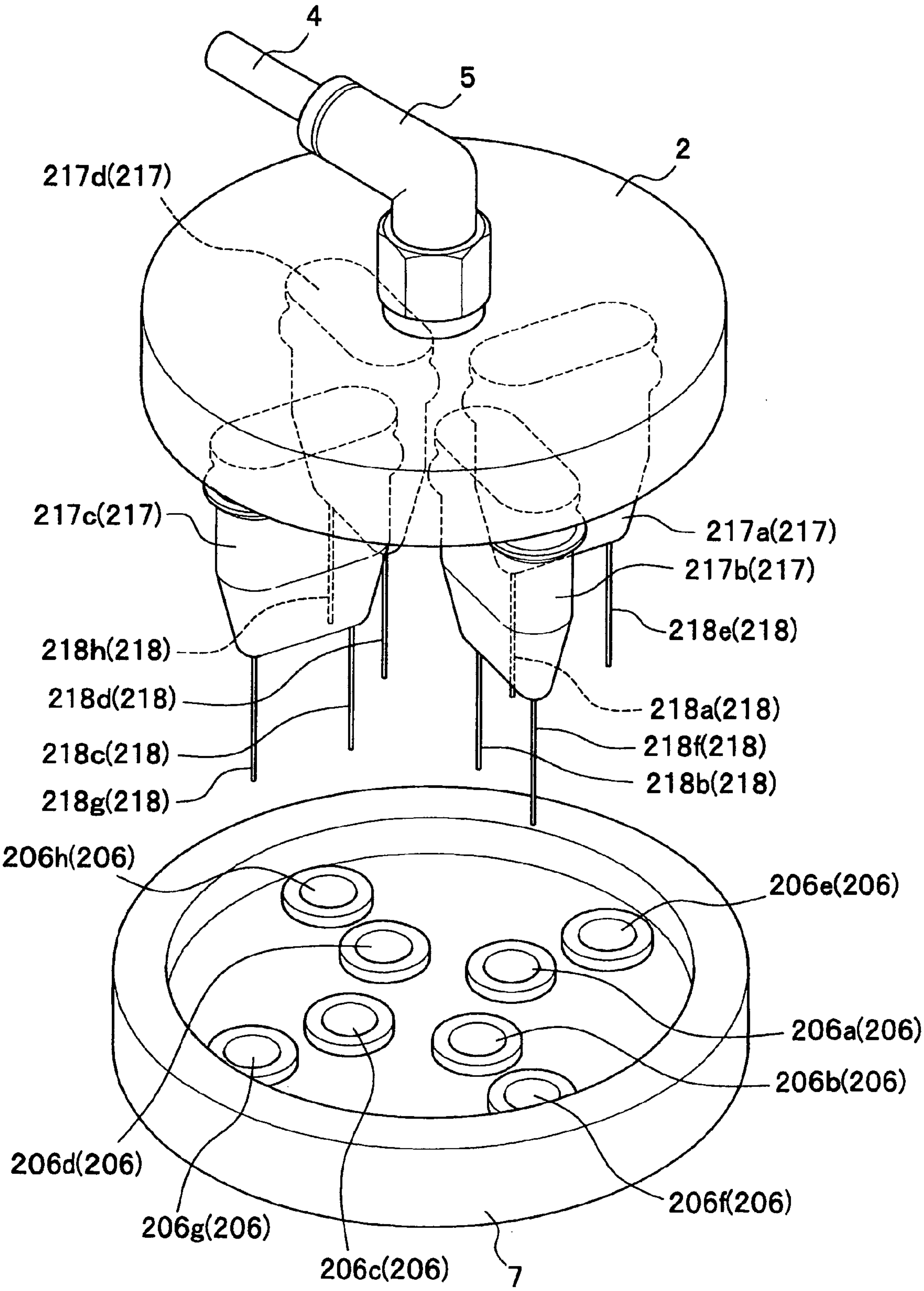
4
5
2
217d(217)
217c(217)
217a(217)
217b(217)
218h(218)
218e(218)
218d(218)
218a(218)
218c(218)
218f(218)
218g(218)
218b(218)
206h(206)
206e(206)
206a(206)
206b(206)
206d(206)
206f(206)
206g(206)
206c(206)
7

FIG.11

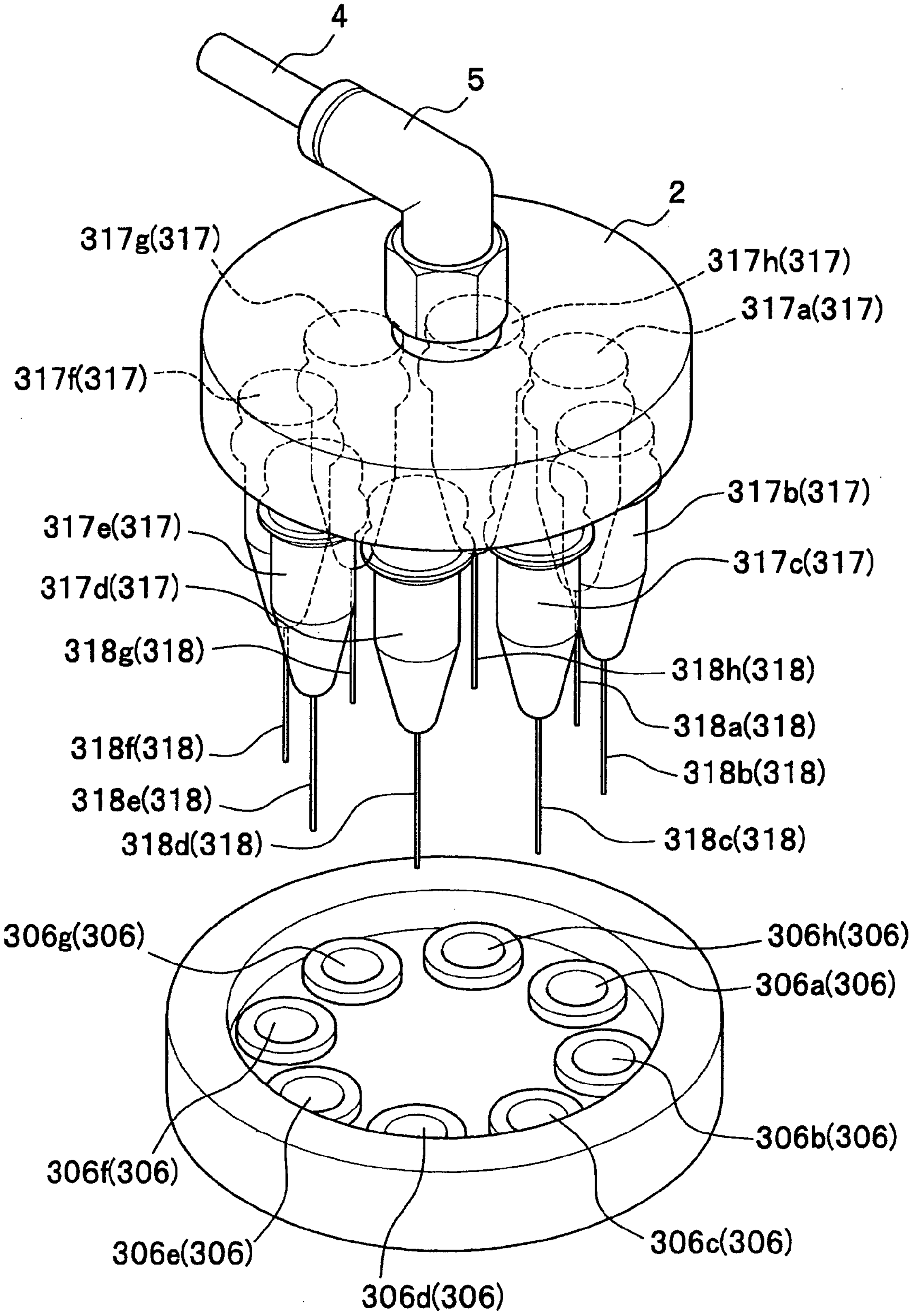
4
5
2
317g(317)
317h(317)
317a(317)
317f(317)
317b(317)
317e(317)
317c(317)
317d(317)
318g(318)
318h(318)
318a(318)
318f(318)
318b(318)
318e(318)
318d(318)
318c(318)
306g(306)
306h(306)
306a(306)
306b(306)
306f(306)
306e(306)
306c(306)
306d(306)

FIG.13(a)

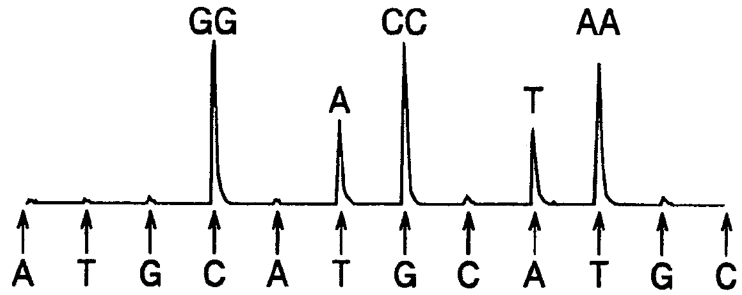


FIG.13(b)

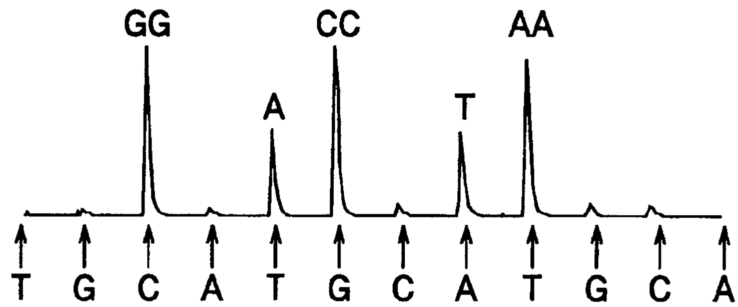


FIG.13(c)

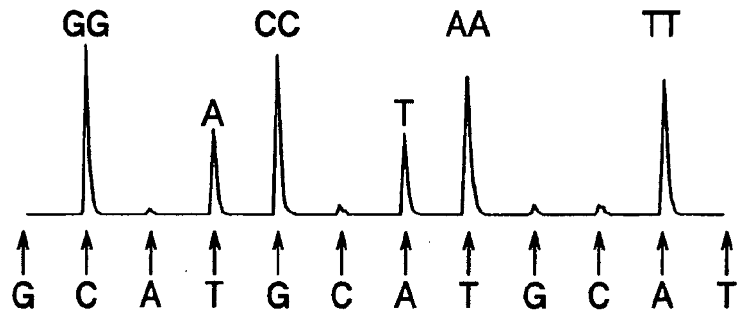


FIG.13(d)

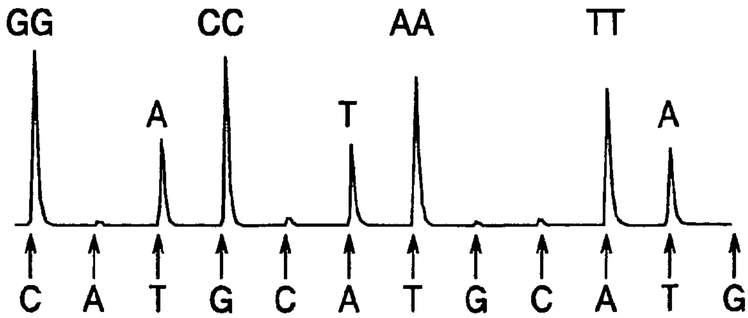

European Patent Office

# EUROPEAN SEARCH REPORT

Application Number
EP 05 01 8317

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | PATENT ABSTRACTS OF JAPAN vol. 2003, no. 12, 5 December 2003 (2003-12-05) & JP 2004 012411 A (HITACHI LTD), 15 January 2004 (2004-01-15) * abstract; figures 1,2,9,13 * ----- | 1-18 | INV. G01N21/76 G01N21/25 |
| X | PATENT ABSTRACTS OF JAPAN vol. 2000, no. 19, 5 June 2001 (2001-06-05) & JP 2001 056337 A (HITACHI LTD), 27 February 2001 (2001-02-27) * abstract; figures 3-5 * ----- | 1-18 | |
| X | US 2004/022689 A1 (WULF JUERGEN ET AL) 5 February 2004 (2004-02-05) * figures 1,6,7 * ----- | 1-18 | |
| X | EP 0 025 350 A (DYNATECH AG) 18 March 1981 (1981-03-18) * figures 1,2 * ----- | 1-18 | TECHNICAL FIELDS SEARCHED (IPC) |
| A | US 5 112 134 A (CHOW ET AL) 12 May 1992 (1992-05-12) * figure 1 * ----- | 1-18 | G01N |
| A | EP 0 185 330 A (CETUS CORPORATION) 25 June 1986 (1986-06-25) * figure 3 * ----- | 1-18 | |

1

The present search report has been drawn up for all claims

| Place of search | Date of completion of the search | Examiner |
|---|---|---|
| Munich | 21 April 2006 | Mason, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 05 01 8317

This annex lists the patent family members relating to the patent documents cited in the above-mentioned European search report.
The members are as contained in the European Patent Office EDP file on
The European Patent Office is in no way liable for these particulars which are merely given for the purpose of information.

21-04-2006

| Patent document cited in search report | Publication date | Patent family member(s) | Publication date |
|---|---|---|---|
| JP 2004012411 A | 15-01-2004 | NONE | |
| JP 2001056337 A | 27-02-2001 | NONE | |
| US 2004022689 A1 | 05-02-2004 | DE 10236029 A1 | 19-02-2004 |
| | | GB 2391623 A | 11-02-2004 |
| EP 0025350 A | 18-03-1981 | NONE | |
| US 5112134 A | 12-05-1992 | NONE | |
| EP 0185330 A | 25-06-1986 | AU 581273 B2 | 16-02-1989 |
| | | AU 5132685 A | 26-06-1986 |
| | | DE 185330 T1 | 27-11-1986 |
| | | DK 591985 A | 19-06-1986 |
| | | FI 855073 A | 19-06-1986 |
| | | NO 855107 A | 19-06-1986 |
| | | NZ 214582 A | 12-02-1988 |

EPO FORM P0459

For more details about this annex : see Official Journal of the European Patent Office, No. 12/82

```
SEQUENCE LISTING

<110>  Hitachi, Ltd

<120>  Luminescence detection apparatus

<130>  EPA-42251

<140>  05 018 317.7

<160>  2

<170>  PatentIn version 3.1

<210>  1
<211>  181
<212>  DNA
<213>  Homo sapiens

<220>
<221>  gene
<222>  (1)..(181)


<400>  1
tgttgaagta ccagcatgca ccatggggga cgctgctcat cttcttaaag atttgatttt     60

tctcccataa aatgtttttt ctctttctgg taggacaaat attggcaaat ttgacatgat    120

ttgggataga ggagcattag ttgccattaa tccaggtgat cgcaaatggt aagtaatttt    180

t                                                                     181

<210>  2
<211>  24
<212>  DNA
<213>  Artificial sequence

<220>
<223>  primer

<400>  2
aaaattactt accatttgcg atca                                             24
```